# EUROPÄISCHE PATENTSCHRIFT

(11) **EP 1 527 856 B1**
(45) Veröffentlichungstag und Bekanntmachung des Hinweises auf die Patenterteilung: **20.12.2006**
(21) Anmeldenummer: 04103427.3
(22) Anmeldetag: 19.07.2004
(51) Int. Cl.: B26D 7/26

(54) **Längsschneidemaschine mit einer Einrichtung zum automatischen Wechseln von Schneideinrichtungen**
Slitter equipped with a device for automatically changing the cutting devices
Machine de découpe longitudinale équipée d'un dispositif pour changer automatiquement les outils de coupe

(30) Priorität: 31.07.2003 DE 20311973 U
(43) Veröffentlichungstag der Anmeldung: 04.05.2005
(73) Patentinhaber: Voith Patent GmbH, 89522 Heidenheim (DE)
(72) Erfinder: Supe-Dienes, Rudolf, 51491 Overath (DE)
(74) Vertreter: Kunze, Klaus

(56) Entgegenhaltungen:
- DE-A1- 3 637 733
- DE-A1- 19 516 347
- DE-U1- 20 120 017

## Beschreibung

Die Erfindung betrifft eine Längsschneidemaschine mit einer Mehrzahl von daran gehalterten Schneideinrichtungen in Form jeweils eines Messerhalters als Träger eines daran angeordneten Kreismessers, siehe z.B. die DE 20120017 U1.

Bei derartigen Längsschneidemaschinen besteht das Problem, dass der Wechsel des Kreismessers an einem einzelnen Messerhalter zeitaufwendig ist, weil das Kreismesser an dem betreffenden Messerhalter von Hand ausgebaut und ein neues Messer montiert werden muss. Obwohl aufgrund geeigneter Ausgestaltung der Halterung der Messerblätter an dem Messerkopf des Messerhalters beispielsweise mittels entsprechend ausgebildeter Messeranbauteile der Demontage- bzw. der Montageaufwand reduziert sind, ist der Einsatz einer Bedienerperson erforderlich; insbesondere bei mit geringem Abstand zueinander an der Längsschneidemaschine angeordneten Messerhaltern können wegen der erforderlichen Handarbeit erhebliche Rüstzeiten für den Messerwechsel entstehen.

Der Erfindung liegt daher die Aufgabe zugrunde, eine Längsschneidemaschine der eingangs genannten Art so weiterzubilden, dass die für einen Messerwechsel erforderlichen Rüstzeiten verkürzt sind.

Die Lösung dieser Aufgabe ergibt sich einschließlich vorteilhafter Ausgestaltungen und Weiterbildungen der Erfindung aus dem Inhalt der Ansprüche, welche dieser Beschreibung nachgestellt sind.

Die Erfindung sieht in ihrem Grundgedanken vor, dass eine Einrichtung zum automatischen Wechsel der Schneideinrichtung vorgesehen ist, die ein Magazin zur Bevorratung wenigstens einer neuen Schneideinrichtung und eine automatisch arbeitende Werkzeuganordnung zum Ausbau der Schneideinrichtung und zur Montage der aus dem Magazin entnommenen neuen Schneideinrichtung umfasst. Der Erfindungsgedanke verkörpert sich also darin, dass an der Längsschneidemaschine eine Einrichtung vorgesehen ist, die auf einen Steuerbefehl hin einen Wechsel einer oder auch mehrerer Schneideinrichtungen automatisch ausführt und hierzu die neu zu montierende Schneideinrichtung bzw. die Schneideinrichtungen in einem Magazin mitführt und gleichzeitig in der Lage ist, über eine automatisch arbeitende Werkzeuganordnung die jeweilige Schneideinrichtung zu demontieren und durch eine neue Schneideinrichtung zu ersetzen. Somit ist es in vorteilhafter Weise möglich, unabhängig vom Arbeitszyklus der Längsschneidemaschine das Magazin der Einrichtung mit der erforderlichen Anzahl von Schneideinrichtungen zu bestücken, so dass die neuen Schneideinrichtungen für den automatischen Wechselprozess zur Verfügung stehen.

Nach einem Ausführungsbeispiel der Erfindung erfasst die Einrichtung als Wechselteil der Schneideinrichtung lediglich das an dem Messerhalter gehalterte Messerblatt, so dass in dem Magazin auch nur einzelne Messerblätter mitzuführen und für eine Manipulation vorrätig zu halten sind.

Alternativ kann vorgesehen sein, dass die Einrichtung das Messerblatt einschließlich mit dem Messerblatt verbundener und der Halterung des Messerblattes an dem Messerhalter dienender Messeranbauteile als Wechselteile der jeweiligen Schneideinrichtungen erfasst, und wiederum alternativ kann vorgesehen sein, dass die Einrichtung den an dem Messerhalter gehalterten vollständigen Messerkopf als Träger des Messerblattes als Wechselteil der Schneideinrichtung erfasst. In entsprechender Anpassung müssen die von der Einrichtung mitgeführten Magazine jeweils entsprechend ausgebildet sein, um die Wechselteile aufzunehmen, und es muss die Werkzeuganordnung zur Demontage bzw. zur Montage des jeweiligen Wechselteils eingerichtet sein.

Gemäß einer weiteren Ausführungsform kann insbesondere bei einer über die Länge der Längsschneidemaschine verfahrbaren Einrichtung vorgesehen sein, dass die Einrichtung den an der Längsschneidemaschine gehalterten Messerhalter als Wechselteil der Schneideinrichtung erfasst, so dass auch der Gedanke von der Erfindung umfasst ist, den kompletten Messehalter zu wechseln; dies kann sich mechanisch sogar einfacher gestalten als der Wechsel eines einzelnen Kreismessers. In einem entsprechend ausgebildeten Magazin kann durchaus eine Anzahl von kompletten Messerhaltern mitgeführt werden. Damit ist nicht nur die Möglichkeit eines Messerwechsels, sondern auch einer Tiefeneinstellung am Messerhalter wie auch einer Überholung des Messerhalters gegeben.

In einer ersten Ausführungsform der Erfindung ist vorgesehen, dass die Einrichtung aus einem an jedem Messerhalter zwischen einer für den Wechsel des Kreismessers geeigneten Arbeitsposition und einer Bestückungsposition drehbar gehalterten Tragarm besteht und an dem äußeren Ende des Tragarms das Magazin mit der Werkzeuganordnung für den Messerwechsel angebracht ist. Bei dieser Ausführungsform braucht in dem Magazin jeweils nur ein Wechselteil in Form eines Messerblattes oder eines Messerblattes einschließlich Messeranbauteilen oder eines Messerkopfes vorgesehen sein, weil nach jedem Messerwechsel und Schwenken des Tragarmes in die Bestückungsposition unabhängig von der weiteren Schneidarbeit der Längsschneidemaschine für den nächsten Auswechselvorgang das jeweilige Wechselteil in das Magazin eingesetzt werden kann.

Alternativ kann vorgesehen sein, dass das Magazin mit der Werkzeuganordnung längs einer zugeordneten Traverse verfahrbar ist, soweit das Magazin dabei im Abstand zum Messerhalter steht, kann vorgesehen sein, die Werkzeuganordnung mittels einer Kolbenstange in eine für den Teilewechsel geeignete Arbeitsposition auszufahren. Bei dieser Ausführungsform kann vorgesehen sein, die Einrichtung so auszulegen, dass an mehreren Messerhaltern in einer Abfolge der Wechsel durchführbar ist, wobei das Magazin entsprechend zur Aufnahme mehrerer Wechselteile eingerichtet sein muss, und entsprechend muss auch die Werkzeuganordnung nicht nur für die Montage und Demontage des Wechselteils sondern auch für die Entnahme der Wechselteile und das Verbringen der Gebrauchteile in das Magazin eingerichtet sein.

Alternativ kann vorgesehen sein, dass die Einrichtung an einem längs der Längsschneidemaschine verfahrbaren Schlitten gehaltert ist und an dem Schlitten ein zwischen einer für den Wechsel der Schneideinrichtung geeigneten Arbeitsposition und einer Bestückungsposition beweglicher Tragarm angeordnet ist, an dessen Ende das Magazin mit der Werkzeuganordnung angebracht ist, wobei insbesondere vorgesehen sein kann, dass der Tragarm an dem Schlitten schwenkbar angeordnet ist. Auch in diesem Fall sind Magazin und Werkzeuganordnung für einen mehrfachen Teilewechsel eingerichtet.

In der Zeichnung sind Ausführungsbeispiele der Erfindung wiedergegeben, welche nachstehend beschrieben sind. Es zeigen:
- Fig. 1: einen an einer Längsschneidemaschine gehalterten Messerhalter mit Kreismesser und zugeordneter Messerwechseleinrichtung in einer schematischen Seitenansicht,
- Fig. 2: den Gegenstand der Figur 1 in einer anderen Ausführungsform,
- Fig. 3: den Gegenstand der Figur 1 in einer weiteren Ausführungsform.

Die Erfindung wird nachfolgend anhand von Ausführungsbeispielen erläutert, die sich auf den Wechsel des Kreismessers an dem Messerkopf eines Messerhalters beziehen; Gegenstand des Wechselprozesses können jedoch auch der Messerkopf und der komplette Messerhalter sein.

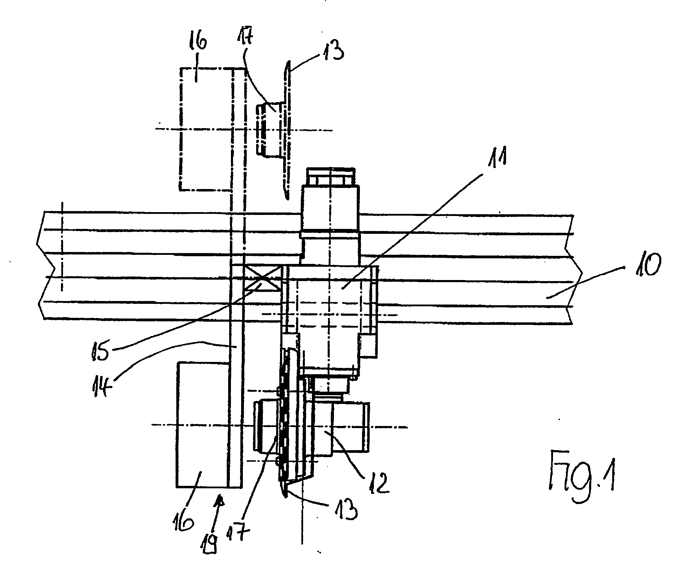

An der Traverse 10 einer nicht weiter dargestellten Längsschneidemaschine ist ein Messerhalter 11 verfahrbar angeordnet, der einen Messerkopf 12 trägt, an welchem seinerseits ein Kreismesser 13 gehaltert ist. Als Einrichtung 19 für einen automatischen Messerwechsel ist an dem Messerhalter 11 ein um ein Drehlager 15 schwenkbarer Tragarm 14 angeordnet, an dessen Ende ein Magazin 16 sitzt, welches mit einer beweglichen Werkzeuganordnung 17 für einen automatischen Messerwechsel verbunden ist. In Figur 1 ist in durchgezogenen Linien die Arbeitsposition des Magazins 16 mit Werkzeuganordnung 17 dargestellt, in welcher mittels einer geeigneten Ausbildung der Werkzeuganordnung 17 die Demontage des Kreismessers 13 und anschließend eine Montage eines neuen, aus dem Magazin 16 entnommenen Kreismessers erfolgen kann. In gestrichelten Linien ist die Stellung des Tragarmes 14 nach Verschwenken in eine Bestückungsposition dargestellt, in welcher nun während des Schneidbetriebes das gebrauchte Kreismesser aus dem Magazin 16 zu entnehmen und durch ein neues Kreismesser zu ersetzen ist, welches dann durch Verschwenken des Tragarms 14 in die in durchgezogenen Linien dargestellte Arbeitsposition für einen erneuten Messerwechsel zur Verfügung steht.

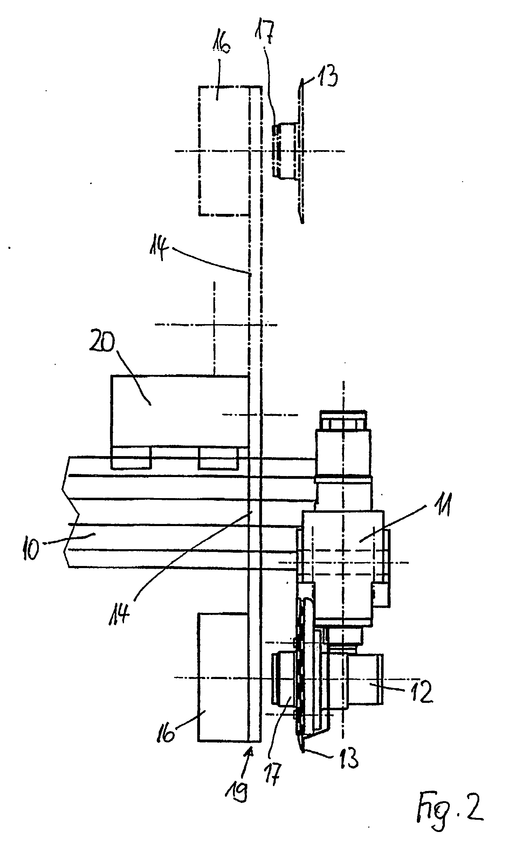

Bei dem in Figur 2 dargestellten Ausführungsbeispiel ist der Tragarm 14 einschließlich Magazin 16 und Werkzeuganordnung 17 an einem an der Traverse 10 der Längsschneidemaschine verfahrbar angeordneten Schlitten 20 gehaltert, wobei der Schlitten 20 nacheinander eine Mehrzahl von Messerhaltern 11 abfahren und den entsprechenden Messerwechsel vollführen kann. Dabei kann der Tragarm nach einem vollzogenen Messerwechsel so verschwenkt werden, dass der jeweils bestückte Messerhalter 11 überfahren werden kann und der Tragarm 14 einen Zugang zu dem nächsten Messerhalter findet. Dabei ist in einer nicht dargestellten Weise durch Auslegung der Werkzeuganordnung 17 dafür Sorge zu tragen, dass jeweils mehrere Messer aus dem Magazin 16 entnommen und mehrere Gebrauchteile nacheinander in das Magazin 16 eingestellt werden können. In gestrichelten Linien ist wiederum die Bestückungsposition dargestellt, in welcher die Entnahme der Gebrauchsmesser aus dem Magazin 16 und das Einstellen von neuen Messern in das Magazin 16 erfolgen kann.

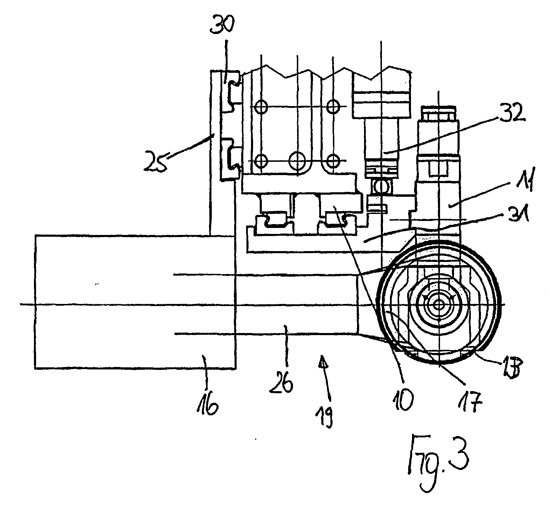

Bei dem in Figur 3 ausgeführten Ausführungsbeispiel schließlich ist das Magazin 16 selbst an zusätzlichen Traversen 30 mittels eines Halters 25 angeordnet und verfahrbar, wobei bei dem dargestellten Ausführungsbeispiel der Messerhalter 11 mittels eines Halterstücks 31 an der Traverse 10 der Längsschneidemaschine verfahrbar ist. Weiterhin ist dem Messerhalter 11 eine Positioniereinrichtung 32 für die Verschiebung des Messerhalters 11 zugeordnet. Da bei dem dargestellten Ausführungsbeispiel das Magazin 16 mit einem Abstand zu dem Messerhalter 11 verfahrbar ist, ist die Werkzeuganordnung 17 mittels einer Kolbenstange 26 in die Arbeitsposition verfahrbar.

### Bezugszeichenliste

- 10: Traverse
- 11: Messerhalter
- 12: Messerkopf
- 13: Kreismesser
- 14: Tragarm
- 15: Drehlager
- 16: Magazin
- 17: Werkzeuganordnung
- 19: Einrichtung
- 20: Schlitten
- 25: Halter
- 26: Kolbenstange
- 30: Traverse
- 31: Halterstück
- 32: Positioniereinrichtung

## Patentansprüche

1. Längsschneidemaschine mit einer Mehrzahl von daran gehalterten Schneideinrichtungen in Form jeweils eines Messerhalters (11) als Träger eines daran angeordneten Kreismessers (13),
**dadurch gekennzeichnet,**
**dass** eine Einrichtung (19) zum automatischen Wechsel der Schneideinrichtung (13) vorgesehen ist, die ein Magazin (16) zur Bevorratung wenigstens einer neuen Schneideinrichtung und eine automatisch arbeitende Werkzeuganordnung (17) zum Ausbau der Schneideinrichtung und zur Montage der aus dem Magazin entnommenen neuen Schneideinrichtung (13) umfasst.

2. Längsschneidemaschine nach Anspruch 1,
**dadurch gekennzeichnet,**
**dass** die Einrichtung (19) das an dem Messerhalter (11) gehalterte Messerblatt als Wechselteil der Schneideinrichtung erfasst.

3. Längsschneidemaschine nach Anspruch 1,
**dadurch gekennzeichnet,**
**dass** die Einrichtung (19) das Messerblatt einschließlich mit dem Messerblatt verbundener und der Halterung des Messerblattes an dem Messerhalter (11) dienender Messeranbauteile als Wechselteil der Schneideinrichtung erfasst.

4. Längsschneidemaschine nach Anspruch 1,
**dadurch gekennzeichnet,**
**dass** die Einrichtung den an dem Messerhalter (11) gehalterten vollständigen Messerkopf (12) als Träger des Messerblattes als Wechselteil der Schneideinrichtung erfasst.

5. Längsschneidemaschine nach Anspruch 1,
**dadurch gekennzeichnet,**
**dass** die Einrichtung den an der Längsschneidemaschine gehalterten Messerhalter (11) als Wechselteil der Schneideinrichtung erfasst.

6. Längsschneidemaschine nach einem der Ansprüche 1 bis 4,
**dadurch gekennzeichnet,**
**dass** die Einrichtung (19) aus einem an jedem Messerhalter (11) zwischen einer für den Wechsel des Kreismessers (13) geeigneten Arbeitsposition und einer Bestückungsposition drehbar gehalterten Tragarm (14) besteht und an dem äußeren Ende des Tragarms (14) das Magazin (16) mit der Werkzeuganordnung (17) für den Messerwechsel angebracht ist.

7. Längsschneidemaschine nach einem der Ansprüche 1 bis 5,
**dadurch gekennzeichnet,**
**dass** das Magazin (16) mit der Werkzeuganordnung (17) längs einer zugeordneten Traverse (30) verfahrbar ist.

8. Längsschneidemaschine nach Anspruch 6,
**dadurch gekennzeichnet,**
**dass** die Werkzeuganordnung (17) mittels einer Kolbenstange (26) aus dem mit Abstand zum Messerhalter (11) stehenden Magazin (16) in eine für den Wechsel der Schneideinrichtung geeignete Arbeitsposition ausfahrbar ist.

9. Längsschneidemaschine nach einem der Ansprüche 1 bis 5,
**dadurch gekennzeichnet,**
**dass** die Einrichtung (19) an einem längs der Längsschneidemaschine verfahrbaren Schlitten (20) gehaltert ist und an dem Schlitten (20) ein zwischen einer für den Wechsel der Schneideinrichtung geeigneten Arbeitsposition und einer Bestückungsposition beweglicher Tragarm (14) angeordnet ist, an dessen Ende das Magazin (16) mit der Werkzeuganordnung (17) für den Wechsel der Schneideinrichtung angebracht ist.

10. Längsschneidemaschine nach Anspruch 9,
**dadurch gekennzeichnet,**
**dass** der Tragarm (14) an dem Schlitten (20) schwenkbar angeordnet ist.

## Claims

1. Slitting machine having a plurality of cutting devices which are arranged thereon in the form of in each case a knife holder (11) as a carrier for a circular knife (13) which is arranged thereon, **characterized in that** a device (19) is provided for the automatic change of the cutting device (13), which device (19) comprises a magazine (16) for storing at least one new cutting device and an automatically operating tool arrangement (17) for dismantling the cutting device and for assembling the new cutting device (13) which is taken from the magazine.

2. Slitting machine according to Claim 1, **characterized in that** the device (19) grips the knife blade which is held on the knife holder (11) as an exchangeable part of the cutting device.

3. Slitting machine according to Claim 1, **characterized in that** the device (19) grips the knife blade including knife attachment components which are connected to the knife blade and serve to hold the knife blade on the knife holder (11), as an exchangeable part of the cutting device.

4. Slitting machine according to Claim 1, **characterized in that** the device grips the complete knife head (12) which is held on the knife holder (11), as a carrier of the knife blade, as an exchangeable part of the cutting device.

5. Slitting machine according to Claim 1, **characterized in that** the device grips the knife holder (11) which is held on the slitting machine, as an exchangeable part of the cutting device.

6. Slitting machine according to one of Claims 1 to 4, **characterized in that** the device (19) comprises a carrying arm (14) which is held on each knife holder (11) such that it can rotate between an operating position which is suitable for changing the circular knife (13) and a fitting position, and the magazine (16) is attached at the outer end of the carrying arm (14) with the tool arrangement (17) for the knife change.

7. Slitting machine according to one of Claims 1 to 5, **characterized in that** the magazine (16) can be displaced with the tool arrangement (17) along an associated crossmember (30).

8. Slitting machine according to Claim 6,
**characterized in that** the tool arrangement (17) can be extended by means of a piston rod (26) out of the magazine (16) which is at a spacing from the knife holder (11) into an operating position which is suitable for changing the cutting device.

9. Slitting machine according to one of Claims 1 to 5, **characterized in that** the device (19) is held on a carriage (20) which can be displaced along the slitting machine, and a carrying arm (14) which can move between an operating position which is suitable for changing the cutting device and a fitting position is arranged on the carriage (20), the magazine (16) being attached with the tool arrangement (17) for changing the cutting device at the end of the said carrying arm (14).

10. Slitting device according to Claim 9,
**characterized in that** the carrying arm (14) is arranged pivotably on the carriage (20).

## Revendications

1. Machine de découpe longitudinale comprenant une pluralité de dispositifs de coupe fixés sur celle-ci, en forme de support de couteau (11) respectif servant de support pour un couteau circulaire (13) disposé dessus,
**caractérisée en ce qu'**il
est prévu un dispositif (19) pour le changement automatique du dispositif de coupe (13), qui comprend un magasin (16) de stockage d'au moins un nouveau dispositif de coupe et un agencement d'outil (17) fonctionnant automatiquement pour démonter le dispositif de coupe et pour monter le nouveau dispositif de coupe (13) prélevé du magasin.

2. Machine de découpe longitudinale selon la revendication 1,
**caractérisée en ce que**
le dispositif (19) détecte la lame du couteau fixée sur le support de couteau (11) en tant que pièce à remplacer du dispositif de coupe.

3. Machine de découpe longitudinale selon la revendication 1,
**caractérisée en ce que**
le dispositif (19) détecte la lame de couteau ainsi que les pièces rapportées du couteau servant à la fixation de la lame du couteau sur le support de couteau (11) en tant que pièce à remplacer du dispositif de coupe.

4. Machine de découpe longitudinale selon la revendication 1,
**caractérisée en ce que**
le dispositif détecte la tête du couteau (12) complète fixée sur le support de couteau; (11) servant de support de la lame de couteau en tant que pièce à remplacer du dispositif de coupe.

5. Machine de découpe longitudinale selon la revendication 1,
**caractérisée en ce que**
le dispositif détecte le support de couteau (11) fixé sur la machine de découpe longitudinale en tant que pièce à remplacer du dispositif de coupe.

6. Machine de découpe longitudinale selon l'une quelconque des revendications 1 à 4,
**caractérisée en ce que**
le dispositif (19) se compose d'un bras de support (14) maintenu à rotation sur chaque support de couteau (11) entre une position de travail appropriée pour le remplacement du couteau circulaire (13) et une position d'insertion, et le magasin (16) avec l'agencement d'outil (17) pour le remplacement du couteau est monté à l'extrémité extérieure du bras de support (14).

7. Machine de découpe longitudinale selon l'une quelconque des revendications 1 à 5,
**caractérisée en ce que**
le magasin (16) peut être déplacé avec l'agencement d'outil (17) le long d'une traverse (30) associée.

8. Machine de découpe longitudinale selon la revendication 6,
**caractérisée en ce que**
l'agencement d'outil (17) peut être sorti au moyen d'une tige de piston (26) hors du magasin (16) espacé du support de couteau (11) dans une position de travail appropriée pour le remplacement du dispositif de coupe.

9. Machine de découpe longitudinale selon l'une quelconque des revendications 1 à 5,
**caractérisée en ce que**
le dispositif (19) est fixé sur un chariot (20) déplaçable le long de la machine de découpe longitudinale et un bras de support (14) est disposé sur le chariot (20) entre une position de travail appropriée pour le remplacement du dispositif de coupe et une position d'insertion, le magasin (16) étant monté à son extrémité avec l'agencement d'outil (17) pour le remplacement du dispositif de coupe.

10. Machine de découpe longitudinale selon la revendication 9,
**caractérisée en ce que**
le bras de support (14) est disposé de manière à pouvoir pivoter sur le chariot (20).
